# EUROPEAN PATENT SPECIFICATION

(11) **EP 4 472 397 B1**
(45) Date of publication and mention of the grant of the patent: **15.10.2025**
(21) Application number: 23706180.9
(22) Date of filing: 23.01.2023
(51) Int. Cl.: A01D 34/00

(54) **AUTONOMOUS WORKING VEHICLE SYSTEM HAVING BASE STATION WITH CANOPY**
AUTONOMES ARBEITSFAHRZEUGSYSTEM MIT BASISSTATION MIT ÜBERDACHUNG
SYSTÈME DE VÉHICULE DE TRAVAIL AUTONOME AYANT UNE STATION DE BASE À AUVENT

(30) Priority: 02.02.2022 US 202263305791 P
(43) Date of publication of application: 11.12.2024
(73) Proprietor: The Toro Company, Bloomington, MN 55420-1196 (US)
(72) Inventor: VOLOVSEK, Ryan J., Bloomington, Minnesota 55420-1196 (US); WERSAL, Nicholas J., Bloomington, Minnesota 55420-1196 (US); WADZINSKI, Chris A., Bloomington, Minnesota 55420-1196 (US); JANEY, Gregory S., Bloomington, Minnesota 55420-1196 (US)
(74) Representative: J A Kemp LLP
(86) International application number: PCT/US2023/011313
(87) International publication number: WO 2023/150032

(56) References cited:
- EP-A1- 2 737 786
- WO-A1-2016/102144
- US-A1- 2005 126 081
- US-B1- 7 185 478

## Description

The present application claims priority to U.S. Provisional Patent Application Number 63/305,791, filed 2 February 2022.

Embodiments of the present disclosure are directed to autonomous working vehicles such as lawn mowers and other ground working machines and, more particularly, to systems including such vehicles and their associated charging or base stations.

### BACKGROUND

Ground working vehicles are known for performing a variety of tasks. For instance, powered lawn mowers are used by both homeowners and professionals alike to maintain grass areas within a property.

In recent years, robotic lawn mowers adapted to autonomously mow have become more prevalent. These mowers typically operate unattended within a predefined boundary of a property, relying upon various boundary detection capabilities to ensure the mower is constrained to specific work areas within the predefined boundary.

Typically, autonomous mowers periodically return to a base station during periods of inactivity to, for example, recharge onboard batteries that power the mower.

US 7 185 478 B1 discloses an automated lawn cutting and vacuum system. The system includes an automated lawnmower comprising a mower housing. A control panel provided on the mower housing automatically controls the mowing, driving and steering functions of the automated lawnmower

### SUMMARY

The invention is defined in the independent claims. Further aspects and preferred embodiments are defined in the dependent claims. Any aspects, embodiments and examples of the present disclosure which do not fall under the scope of the appended claims do not form part of the invention and are merely provided for illustrative purposes.

The above summary is not intended to describe each embodiment or every implementation. Rather, a more complete understanding of illustrative embodiments will become apparent and appreciated by reference to the following Detailed Description of Exemplary Embodiments and claims in view of the accompanying figures of the drawing.

### BRIEF DESCRIPTION OF THE VIEWS OF THE DRAWING

Exemplary embodiments will be further described with reference to the figures of the drawing, wherein:
FIG. 1 is a perspective view of an autonomous working vehicle system in accordance with one example of the present disclosure, the system including an autonomous working vehicle (e.g., ground working machine such as a robotic lawn mower), a base station configured to receive the vehicle, and a canopy or shade to shade the vehicle from sunlight when the vehicle is received by the base station, wherein the canopy forms part of a frame assembly;
FIG. 2 is a diagrammatic side elevation view of an autonomous working vehicle (e.g., lawn mower) in accordance with an example of the present disclosure;
FIG. 3 is a diagrammatic view of the vehicle, base station, and frame assembly of FIG. 1;
FIG. 4 is a perspective view of a base station with a frame assembly attached thereto in accordance with embodiments of the present disclosure, wherein the frame assembly includes a canopy supported by a frame;
FIG. 5 is an enlarged view of an exemplary latch used to secure the frame assembly of FIG. 4 to the base station;
FIG. 6 is a section view of the latch taken along line 6-6 of FIG. 5;
FIG. 7 is a perspective view of the base station with the frame assembly shown exploded therefrom;
FIG. 8 is a partially exploded view of one support member of the frame assembly illustrating a positive retention latch used to secure the frame assembly to the base station;
FIG. 9 is a perspective view of the frame assembly reconfigured to form a vehicle handle for attachment to a working vehicle, the handle shown prior to attachment to the vehicle;
FIG. 10 is a perspective view of the vehicle of FIG. 9 in a manual operating mode, e.g., after attachment of the handle to the vehicle;
FIG. 11 is a section view taken along line 11-11 of FIG. 10 illustrating the interconnection and latching of the handle to the vehicle;
FIG. 12 is a perspective view of a base station and a frame assembly attached thereto in accordance with another embodiment of the present disclosure, wherein the frame assembly includes a canopy supported by a frame;
FIG. 13 is a perspective view of the base station and frame assembly of FIG. 12 from a different perspective; and
FIG. 14 is an enlarged view of a connecting joint of the frame assembly of FIG. 12.

The figures are rendered primarily for clarity and, as a result, are not necessarily drawn to scale. Moreover, various structure/components, including but not limited to fasteners, electrical components (wiring, cables, etc.), and the like, may be shown diagrammatically or removed from some or all of the views to better illustrate aspects of the depicted embodiments, or where inclusion of such structure/components is not necessary to an understanding of the various exemplary embodiments described herein. The lack of illustration/description of such structure/components in a particular figure is, however, not to be interpreted as limiting the scope of the various embodiments in any way.

### DETAILED DESCRIPTION OF EXEMPLARY EMBODIMENTS

In the following detailed description of illustrative embodiments, reference is made to the accompanying figures of the drawing which form a part hereof. It is to be understood that other embodiments, which may not be described and/or illustrated herein, are certainly contemplated.

All headings provided herein are for the convenience of the reader and should not be used to limit the meaning of any text that follows the heading, unless so specified. Moreover, unless otherwise indicated, all numbers expressing quantities, and all terms expressing direction/orientation (e.g., vertical, horizontal, parallel, perpendicular, etc.) in the specification and claims are to be understood as being modified in all instances by the term "about." The term "and/or" (if used) means one or all of the listed elements or a combination of any two or more of the listed elements. "I.e." is used as an abbreviation for the Latin phrase *id est* and means "that is." "E.g.," is used as an abbreviation for the Latin phrase *exempli gratia* and means "for example."

Examples of the present disclosure are directed generally to autonomous working vehicle systems (including an autonomous vehicle or machine) and methods for operating and charging the vehicle. An exemplary autonomous vehicle is described and illustrated herein as a robotic, autonomous lawn mower, and the terms "mower" and "vehicle" may be used interchangeably herein without limitation.

While described primarily as an autonomous vehicle operable in an autonomous operating mode, such vehicles may, in accordance with embodiments of the present disclosure as further described below, also be operated in a manual operating mode. The manual operating mode may be provided for training and transport of the vehicle, and/or for any other use in which the operator may manually direct or control the vehicle (e.g., when using the vehicle as a conventional walk-behind mower).

In some embodiments, the autonomous mower may learn and subsequently recognize a boundary of the work region using an onboard machine vision system and, optionally, other non-vision-based sensors. The vision system may utilize one or more cameras that together form part of a vision or navigation system as described in U.S. Pat. App. Pub. Number US2020/0050208 published February 13, 2020.

Systems and methods in accordance with embodiments of the present disclosure may include a dock or base station to which the vehicle may return when not operating. One function of the base station is to permit charging/re-charging of one or more battery packs associated with the vehicle that provide power to various vehicle systems (e.g., working implement, propulsion, etc.).

During charging of the vehicle by the base station, the charge current provided to the battery pack may be reduced based upon a detected temperature of various components of the vehicle. For example, the temperature of various electronic components (e.g., controllers, battery packs, etc.) of the vehicle may be monitored during charging. When a detected temperature exceed a threshold, the rate of charging (charging current) may be reduced (or even terminated) to prevent thermal damage to vehicle components. While effective at limiting thermal damage, slower charging is generally undesirable as it increases charging time (and thus reduces operational duty cycle of the vehicle).

Elevated component temperatures may be aggravated by solar energy incident on the vehicle during charging. This issue may be especially problematic in climates with high sun angles and where base station locations lack shade from surrounding natural features and/or artificial structures. This problem may be addressed, in some instances, by providing a covered or "dog-house" -style base station that covers the vehicle during charging. Such enclosures, however, may be ill-suited to autonomous vehicles having vision-based navigation as the needed visual perception of surrounding environment is reduced upon entrance into such a covered base station. Rather, vison-based autonomous vehicles may instead utilize base stations that leave portions of the vehicle uncovered (by the base station) when the vehicle is docked or otherwise received by the base station.

To address potential solar heating in this context, systems in accordance with embodiments of the present disclosure may provide a canopy or shade suspended above the base station. The canopy may be of a size - and be positioned - such that it provides desirable shade to at least a portion of one or more surfaces (e.g., upper surface(s)) of the vehicle when the vehicle is received by the base station. By utilizing the canopy, solar heating impact may be reduced without substantially interfering with onboard vision systems, potentially allowing faster vehicle charging.

In some examples, the canopy may include at least one photovoltaic cell. The cell(s) may convert solar energy into electrical energy that is then used to charge the vehicle's battery pack(s). In some examples, the base station may utilize solar energy as a supplement to externally-provided electrical power (e.g., power from a household electrical outlet), while in other embodiments, the base station may rely primarily or even solely on power from the photovoltaic cell(s).

A frame may be included to support the canopy, wherein the frame is configured to attach to the base station. The frame may include: a support member configured to support the canopy over the base station; and an attachment member configured to attach to the base station. The frame may optionally include a connecting joint configured to connect the attachment member to the support member. In some examples, the canopy and frame together may form a frame assembly that may be selectively attached to: the base station, whereby the canopy is suspended above the vehicle when the vehicle is received by the base station; and, alternatively, to the vehicle to enable a manual operating mode of the vehicle. In the manual operating mode, a hand grip formed by the frame permits manual operator control of the vehicle. That is to say, the frame/frame assembly may be reconfigured to form a handle providing a hand grip that permits the operator to control the vehicle while the vehicle is in a manual operating mode. Stated yet another way, the frame assembly may provide both: a canopy to shade the vehicle when the frame assembly is attached to the base station; and a vehicle handle configured to allow usage of the vehicle in a manual operating mode when the frame assembly/handle is attached to the vehicle.

With the above-described construction, exemplary methods of operating an autonomous vehicle may include receiving the vehicle with a base station, wherein a surface (e.g., exterior upper surface) of the vehicle remains uncovered by the base station when the vehicle is received by the base station. Such methods may further include: charging a battery associated with the vehicle while the vehicle is received by the base station; and shading the surface of the vehicle while the vehicle is received by the base station using a canopy suspended above the base station, wherein the canopy is supported by a frame selectively attachable to the base station. Other examples of the present disclosure allow for selectively detaching the frame from the base station and attaching it to the vehicle, wherein a portion of the frame forms a hand grip configured to receive one or both hands of an operator. The vehicle may then be operated in a manual (e.g., conventional) operating mode using the hand grip as further described below.

While the exemplary vehicle is described herein as an autonomous mower, such a configuration is illustrative only as systems and methods described herein also have application to other machines utilizing a base station including, for example, commercial mowing products, other working machines or vehicles (e.g., debris blowers/vacuums, aerators, dethatchers, material spreaders, snow throwers, weeding machines for weed treatment/remediation, mobile watering/treating vehicles, etc.), construction, demolition, and other utility vehicles (e.g., trenchers), observation vehicles, load transportation (e.g., including transport of people and objects), and even indoor working vehicles such as vacuums and floor scrubbers/cleaners.

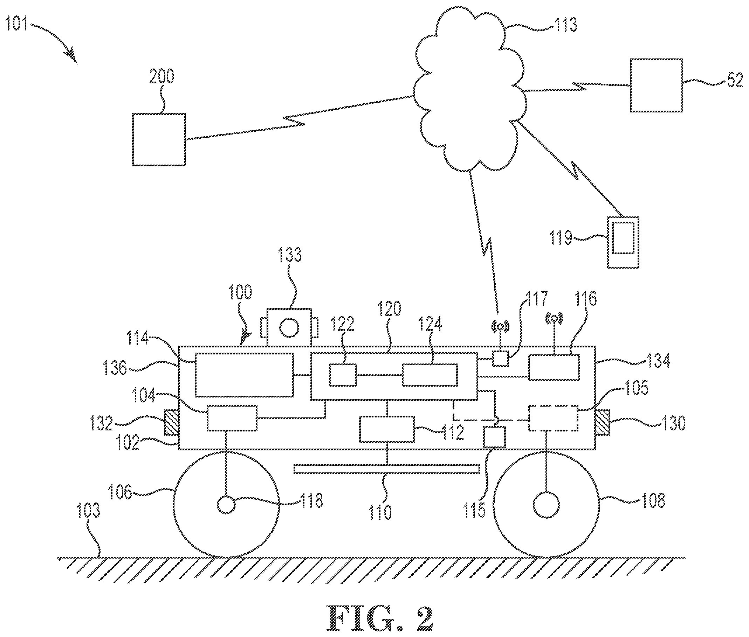

It is noted that the terms "have," "include," "comprises," and variations thereof, do not have a limiting meaning, and are used in their open-ended sense to generally mean "including, but not limited to," where the terms appear in the accompanying description and claims. Further, "a," "an," "the," "at least one," and "one or more" are used interchangeably herein. Moreover, relative terms such as "left," "right," "front," "fore," "forward," "rear," "aft," "rearward," "top," "bottom," "side," "upper," "lower," "above," "below," "horizontal," "vertical," and the like may be used herein and, if so, are from the perspective shown in the particular figure, or while the vehicle (e.g., mower 100) is in an operating configuration (e.g., while the mower 100 is positioned such that wheels 106 and 108 rest upon a generally horizontal ground surface 103 as shown in FIG. 2). These terms are used only to simplify the description, however, and not to limit the interpretation of any embodiment described.

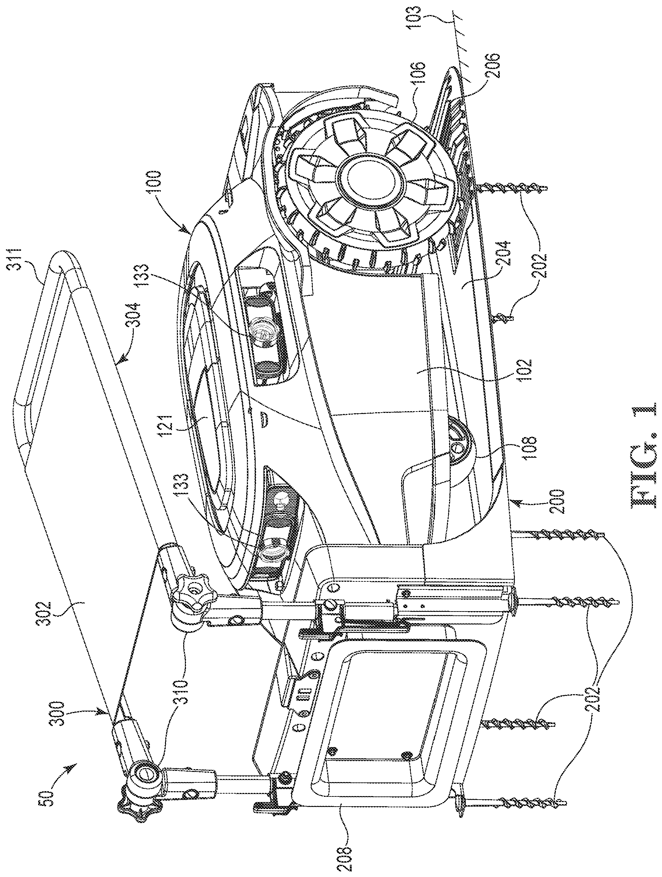

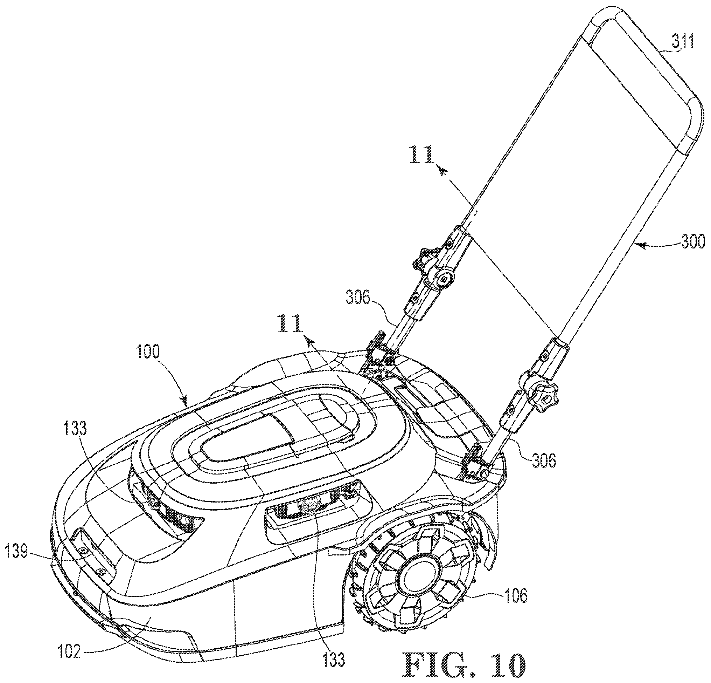

With reference to the figures of the drawing, wherein like reference numerals designate like parts and assemblies throughout the several views, FIG. 1 illustrates an exemplary working vehicle (e.g., mowing) system 50 in accordance with embodiments of the present disclosure. As shown in this view, the system includes an autonomous vehicle, e.g., mower 100, and a base station 200 configured to receive the mower (e.g., during periods when the vehicle/mower is charging or otherwise not operating). The system 50 further includes a frame assembly 300 that may be configured to support a canopy 302 to shade the vehicle 100 when the vehicle is received by the base station 200. As indicated above, the frame assembly 300 can be removed from the base station, reconfigured to form a handle, and attached directly to the mower as shown in FIG. 10.

While the construction of the vehicle is not necessarily central to an understanding of embodiments of this disclosure, FIG. 1 illustrates an exemplary autonomous working vehicle configured as a lawn mower 100 (also referred to herein as "robot"), which forms part of the vehicle or mowing system 50. As further shown in FIG. 1, the mower 100 may include a housing 102 (e.g., which may include a frame or chassis (not shown) and an exterior shroud) that carries and/or encloses various components of the mower as described below. The mower 100 may further include ground support members, such as wheels, rollers, skids, or tracks. In the illustrated embodiment, the ground support members include one or more rear wheels 106 and one or more front wheels 108, that support the housing 102 upon a ground (grass) surface 103. As illustrated, the front wheels 108 are used to support a front-end portion 134 (see FIG. 2) of the housing 102 and the rear wheels 106 are used to support a rear-end portion 136 of the housing.

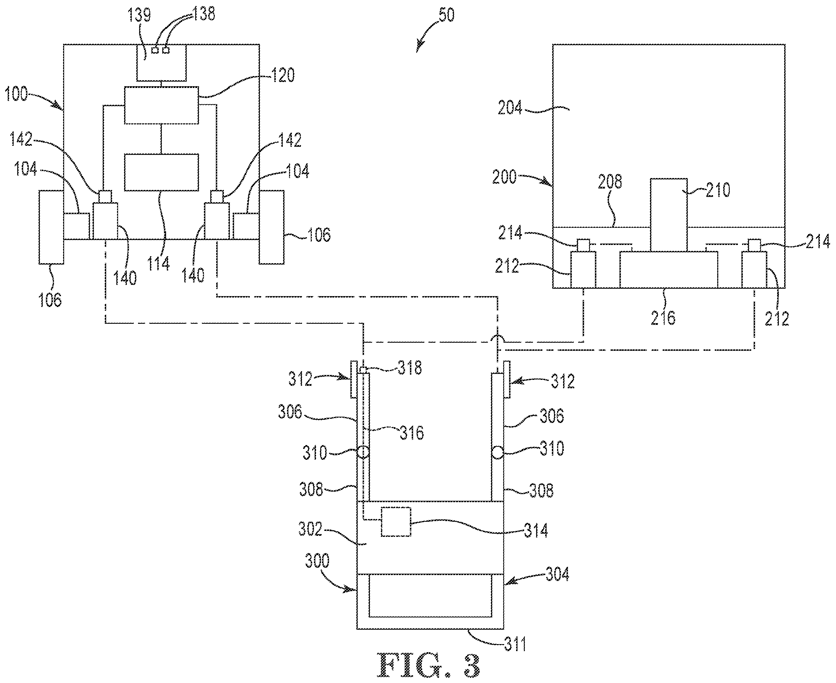

With reference to FIGS. 2 and 3, one or both rear wheels 106 may be driven by a propulsion system (e.g., including one or more electric wheel motors 104) to propel the mower 100 over the ground surface 103. In some embodiments, the front wheels 108 may freely caster relative to the housing 102 (e.g., about vertical axes). In such a configuration, mower direction may be controlled via differential rotation of the two rear wheels 106 in a manner similar to a conventional zero-turn-radius (ZTR) riding mower. That is to say, the propulsion system may include a separate wheel motor 104 for each of a left and right rear wheel 106 (see FIG. 3) so that speed and direction of each rear wheel may be independently controlled. In addition, or alternatively, the front wheels 108 could be actively steerable (e.g., including one or more steer motors 105) to assist with control of mower 100 direction, and/or could be driven by the propulsion system (i.e., to provide a front-wheel or all-wheel drive mower).

An implement or working tool (e.g., a grass cutting element, such as a blade 110) may be coupled to a cutting motor 112 (e.g., implement motor) carried by the housing 102 (see FIG. 2). When the motors 112 and 104 are energized, the mower 100 may be propelled over the ground surface 103 such that vegetation (e.g., grass) over which the mower passes is cut by the rotating blade 110. While illustrated herein using only a single blade 110 and/or motor 112, mowers incorporating multiple blades, powered by single or multiple motors, are contemplated within the scope of this disclosure. Moreover, while described herein in the context of one or more conventional "blades," other cutting elements including, for example, disks, nylon string or line elements, knives, cutting reels, etc., are certainly possible without departing from the scope of this disclosure. Still further, embodiments combining various cutting elements, e.g., a rotary blade with an edge-mounted string trimmer, are also contemplated.

The mower 100 may further include a power source, which in one embodiment, is a battery pack 114 (the terms "battery" and "battery pack" are used interchangeably herein) having a lithium-based chemistry (e.g., lithium-ion). Other embodiments may utilize batteries of other chemistries, or other power source technologies (e.g., solar power, fuel cell, internal combustion engines) altogether, without departing from the scope of this disclosure. It is further noted that, while shown as using independent blade and wheel motors, such a configuration is illustrative only as embodiments wherein blade and wheel power is provided by a single motor are also contemplated.

The mower 100 may further include one or more sensors to provide location data. For instance, some embodiments may include a Global Navigational Satellite System (GNSS, e.g., global positioning system or "GPS") receiver 116 (or other position sensor that may provide similar data) that is adapted to estimate a position of the mower 100 within a work region and provide such information to an electronic controller 120 (described below). In other embodiments, one or more of the wheels 106, 108 may include an encoder 118 that provides wheel rotation/speed information (odometry) that may be used to estimate mower position (e.g., based upon an initial start position) within a given work region. The mower 100 may also include a sensor 115 adapted to detect a boundary wire, which could be used alternatively or in addition to computer vision-based navigational techniques.

The mower 100 may optionally include one or more front obstacle detection sensors 130 and one or more rear obstacle detection sensors 132 (e.g., bump and/or lift sensors), as well as other sensors, such as side obstacle detection sensors (not shown). The obstacle detection sensors 130, 132 may be used to detect an obstacle in the path of the mower 100 when travelling in a forward or reverse direction, respectively (the mower 100 may be capable of mowing while moving in both forward and reverse directions). As illustrated, the sensors 130, 132 may be located at the front-end portion 134 and rear-end portion 136 of the mower 100, respectively (or at any other location on the mower). In addition to the sensors described, other sensors now known or later developed may also be incorporated into the mower 100.

The mower 100 may include one or more computer vision-based sensors to provide localization data, such as position, orientation, or velocity. The computer vision-based sensors may include one or more cameras 133 that capture or record digital image data for use with a vision system. The cameras 133 may be described as part of the vision system of the mower 100. Types of image data include, for example, training image data and/or operational image data. Other image data may include monitoring and security image data.

In some embodiments, the mower 100 includes four cameras 133. One camera 133 may be positioned in each of one or more directions including a forward-facing direction, a reverse-facing direction, a first (e.g., left) side-facing direction, and a second (e.g., right) side-facing direction, thereby forming Cardinal directions relative to the mower 100.

The mower 100 may also include the controller 120 adapted to monitor and control various mower functions. The controller 120 may include a processor 122 that receives various inputs and executes one or more computer programs or applications stored in memory 124. The memory 124 may include computer-readable instructions or applications that, when executed, e.g., by the processor 122, cause the controller 120 to perform various calculations and/or issue commands. That is to say, the processor 122 and memory 124 may together define a computing apparatus operable to process input data and generate the desired output to one or more components/devices. For example, the processor 122 may receive various input data including positional data from a GPS receiver 116 and/or encoders 118 and generate speed and steering angle commands to the wheel motor(s) 104 to cause the rear wheels 106 to rotate (at the same or different speeds and in the same or different directions). In other words, the controller 120 may control the steering angle and speed of the mower 100, as well as the speed and operation of the cutting blade 110.

Reference herein may be made to various parameters, data, or data structures, which may be managed in the controller 120, for example, by being processed by the processor 122 or stored in or retrieved from the memory 124. The controller 120 may use the processor 122 and memory 124 in different systems. Alternatively, one or more processors 122 and memory 124 may be included in each different system. For example, in some embodiments, the controller 120 may form part of a vision system, which may include a processor 122 and memory 124. The controller 120 may also at least partially define a navigation or a charging system, which may also include a processor 122 and memory 124 the same or separate from the processor 122 and memory 124 of the vision system.

Each system may also be described as having its own controller 120. For example, the vision system may be described as including one controller 120 and the navigation system (or charging system) may be described as having its own separate controller 120, i.e., the mower 100 may be described as having multiple controllers 120. In general, as used herein, the term "controller" may be used to describe components of a system that receive inputs and provide outputs and commands to control various other components of a system.

In addition, a communication system 101 may be provided to permit the mower 100/controller 120 to operatively communicate (e.g., via a wireless radio 117) with a communication network such as a wireless network 113, thereby allowing communication (e.g., bidirectional communication) between the mower and other devices. For example, the wireless network 113 may be a cellular or other wide area network, a local area network (e.g., Institute of Electrical and Electronics Engineers (IEEE) 802.11 local "Wi-Fi" network), or a personal area or peer-to-peer network ("P2P," e.g., "Bluetooth" network). Other devices may communicate over the wireless network with the mower 100, including, for example, a remote computer 119, which may be configured as a mobile/cellular phone, tablet, desktop computer, notebook computer, or wearable computer. Preferably, the wireless network 113 is connected to the internet so that the user/remote computer 119 may interact with the communication system 101 regardless of the user's location. Moreover, connection of the wireless network 113 to the internet allows communication with most any other remote computer including, for example, an internet (cloud)- based server 52.

The communication system 101 may also permit communication over the wireless network with the base station 200. Although not specifically illustrated, the communication system 101 may include conventional network hardware including gateways, routers, wireless access points, etc. (not shown).

While illustrated as using a centralized communication network (e.g., wherein each device connects to a central network), other embodiments may utilize a decentralized or ad-hoc network, wherein communication occurs directly between devices. Still further, while illustrated as primarily utilizing wireless communication protocols, such a configuration is not limiting as for example, various devices (e.g., the base station 200) could connect to the communication network or other devices using wired connections without departing from the scope of the appended claims.

It will be readily apparent that the functionality of the controller 120 may be implemented in any manner known to one skilled in the art. For instance, the memory 124 may include any volatile, non-volatile, magnetic, optical, and/or electrical media, such as a random-access memory (RAM), read-only memory (ROM), non-volatile RAM (NVRAM), electrically-erasable programmable ROM (EEPROM), flash memory, and/or any other digital media. While shown as both being incorporated into the controller 120, the memory 124 and the processor 122 could be contained in separate modules.

The processor 122 may include any one or more of a microprocessor, a controller, a digital signal processor (DSP), an application specific integrated circuit (ASIC), a field-programmable gate array (FPGA), and/or equivalent discrete or integrated logic circuitry. In some embodiments, the processor 122 may include multiple components, such as any combination of one or more microprocessors, one or more controllers, one or more DSPs, one or more ASICs, and/or one or more FPGAs, as well as other discrete or integrated logic circuitry. The functions attributed to the controller 120 and/or processor 122 herein may be embodied as software, firmware, hardware, or any combination of these. Certain functionality of the controller 120 may also be performed in the "cloud" (e.g., at the server 52) or other distributed computing systems operably connected to the processor 122.

In FIG. 2, schematic connections are generally shown between the controller 120 and the battery 114, wheel motor(s) 104, blade motor 112, optional boundary wire sensor 115, wireless radio 117, and GPS receiver 116. This interconnection is illustrative only as the various subsystems of the mower 100 could be connected in most any manner, e.g., directly to one another, wirelessly, via a bus architecture (e.g., controller area network (CAN) bus), or any other connection configuration that permits data and/or power to pass between the various components of the mower. Although connections with some of the sensors 130, 132, 133 are not shown, these sensors and other components of the mower 100 may be connected in a similar manner.

The mower 100 may utilize vision and navigation systems to permit autonomous operation of the mower within a given work region(s). For more information regarding exemplary operation and navigation of the mower 100, see U.S. Pat. App. Pub. Number US2020/0050208.

With reference again to FIG. 1, the base station 200 may be secured relative to the ground surface 103 and secured in place using screws 202 or the like. In some embodiments, the base station may be located on the property at a location proximate to an external source of electrical power (e.g., near a household AC electrical outlet).

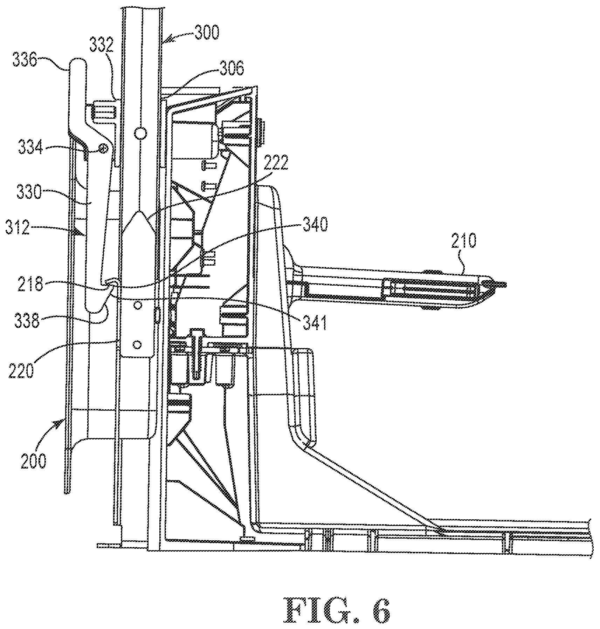

The exemplary base station 200 may include a generally horizontal platform 204 upon which the mower is received and rests during charging. The platform may include friction elements 206 to provide traction assistance to the wheels 106 during movement of the mower 100 onto/off of the platform. The base station 200 may also include a housing 208. In some embodiments, the housing 208 is generally vertical, resulting in the base station having a rotated "L"-shape. The housing 208 may enclose various electronic components of the base station, as well as support charging contacts 210 (see FIG. 6) that engage with corresponding contacts 138 (see FIG. 3) on the mower 100. The base station 200, may further include a receiving structure configured to permit attachment of the frame assembly 300 as further described below.

FIG. 3 diagrammatically illustrates the mower 100, base station 200, and frame assembly 300 separated from one another. As indicated in this view, the frame assembly may include a frame 304 having one or more (e.g., two) attachment portions or members 306, one or more (e.g., two) corresponding support portions or members 308, and a connecting joint 310 configured to connect each attachment member 306 to its corresponding support member 308. In some examples, the two support members may form part of a single U-shaped tubular member (see also FIG. 1) that also forms a hand grip 311 connecting the two support members. While the frame is shown as including separate support and attachment members joined by a connecting joint, such a configuration is exemplary only. For instance, in other examples, the frame may be a unitary member (e.g., curved or dog-leg shaped) having an attachment portion (configured to removably attach to the base station) and a support portion (configured to support the canopy).

Each attachment member 306 may be configured to securely connect to a receiver on the base station 200, and in some examples, on the mower 100. For instance, the base station 200 may include a receiver 212 corresponding to each of the attachment members 306 such that the frame assembly 300 may be connected to the base station as shown in FIG. 1. Similarly, the mower 100 may include a receiver 140 also corresponding to each of the attachment members such that the frame assembly may be connected to the mower 100 and reconfigured to form a handle as shown in FIG. 10. The frame assembly 300 may include a latch 312 affixed to the frame 304, wherein a latch is associated with each of the attachment members 306. The latches may permit positive retention of the frame assembly 300 with the base station and, in some examples, also with the mower 100. As used herein, "positive retention," "positive attachment," and variations thereof refers to the attachment of one component to another in a way that requires a second action (e.g., manipulating a lever, pressing a button, twisting a collet, etc.) to occur before separation of the components may occur.

The base station and/or the mower may further include sensors 214/142 configured to detect when the frame/frame assembly 300 is correctly attached thereto. For example, the mower 100 may include one more sensor(s) 142. Upon detection that the frame assembly 300 has been correctly attached to the mower 100, the sensor(s) 142 may provide a signal to the controller 120. Upon receipt of this signal, the controller 120 may take various actions including disabling autonomous operation of the mower. Stated another way, autonomous control of the vehicle may be disabled upon attachment of the frame assembly to the vehicle. Optionally, the sensor(s) 214 and circuits provided on the base station 200 may provide a signal to a base station controller 216 when the frame assembly is attached to the base station.

In some examples, the canopy 302 may be formed of a material selected for its ability to provide the desired shade characteristics. For example, the canopy may be formed of a knit material, e.g., polyester knit. Other exemplary materials include leather, metal, and plastic. In some embodiments, the canopy may also include one or more photovoltaic cells 314 configured to convert solar energy to electrical energy. Such embodiments may also include an appropriate circuit and electrical connectors (see, e.g., cable 316 and connector 318 in FIG. 3) to operatively connect the cell(s) 314 to the battery 114 to charge the battery, e.g., while the mower 100 is received by the base station. As a result, attachment of the frame assembly 300 to the base station 200 as detected by the sensor(s) 214 may, in some examples, initiate solar charging of the battery 114 of the mower 100 (when the mower is received by the base station). In other examples, the photovoltaic cell(s) 314 may be configured to charge the battery 114 when the frame assembly 300 is attached to the mower 100 (as detected by the sensor(s) 142), e.g., when the mower is operating in the manual operating mode.

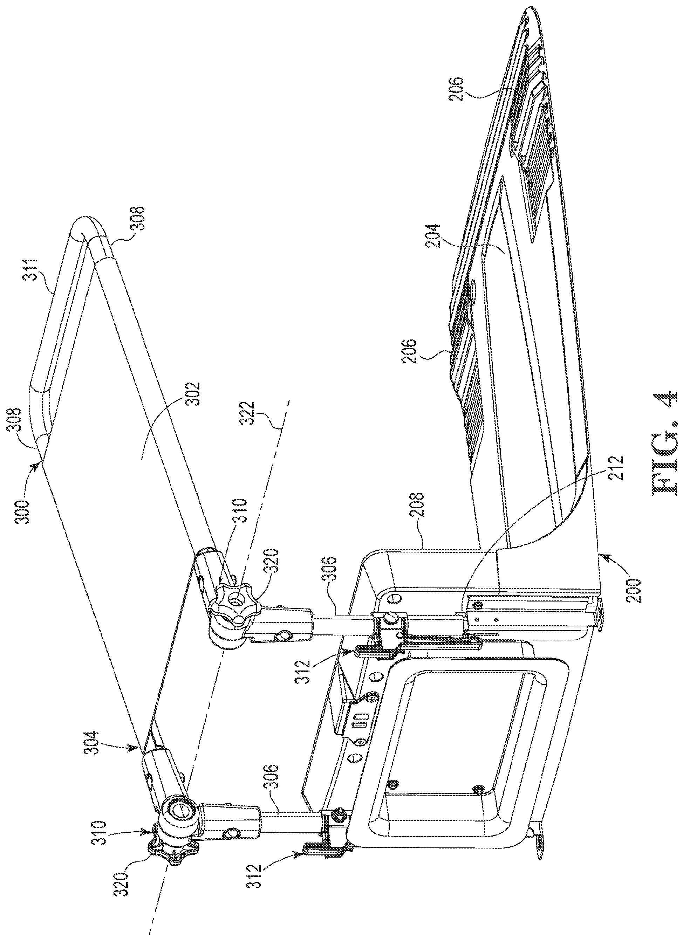

With this overview, FIGS. 4-8 illustrate the base station 200 and frame assembly 300 in accordance with examples of the present disclosure. While aspects of the base station and frame assembly are described with some specificity, such aspects are exemplary only as other configurations are certainly possible within the scope of this disclosure.

FIG. 4 is a perspective view of the base station 200 with the frame assembly 300 attached. As indicated in this view, when the frame assembly 300 is attached to the base station 200 and configured to provide shade via the canopy 302, the connecting joint(s) 310 may permit the orientation of the support members 308 and the canopy 302 to be adjusted relative to the attachment members 306 to a specific angle that provides optimal shade to at least one upper surface 121 (see FIG. 1) of the mower 100. In the illustrated examples, each connecting joint 310 includes a knob 320 that, when rotated in a first direction, loosens the joint and permits the associated support member 308 to be pivoted relative to the corresponding attachment member 306 about an axis 322. Once the canopy 302 is at the desired orientation, the knob(s) 320 may be rotated in the opposite direction to tighten the joint, thereby securing the relative position of each support member 308 relative to its associated attachment member 306.

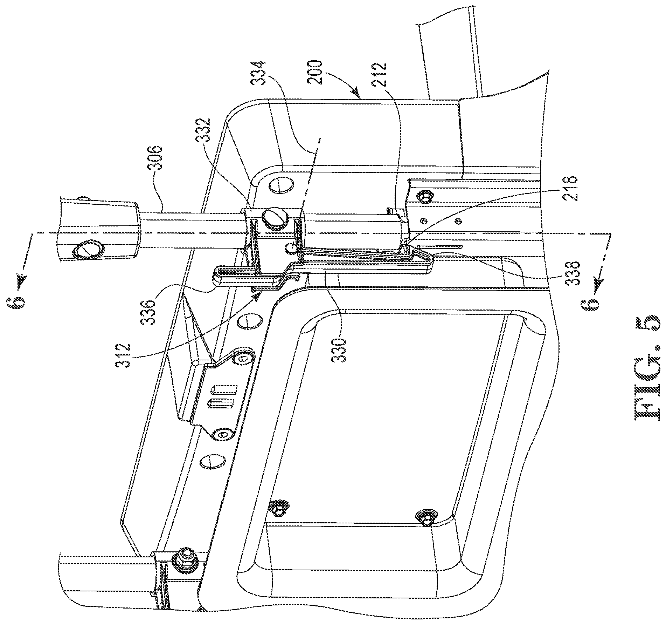

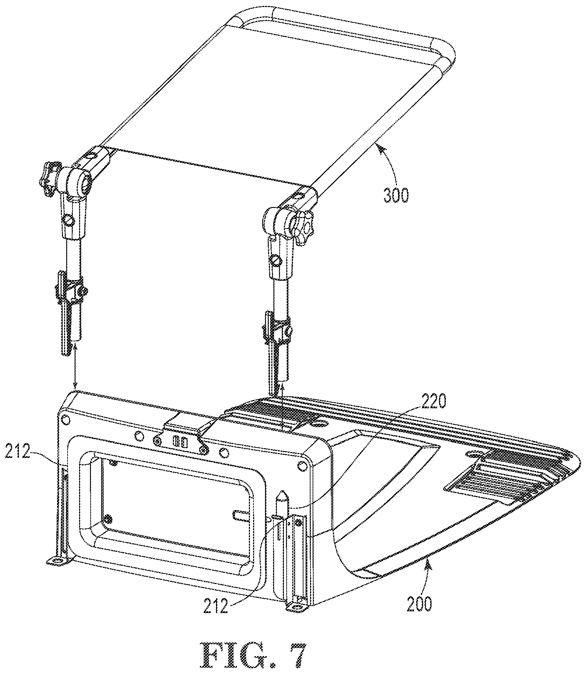

FIG. 5 is an enlarged view of one of the latches 312, while FIG. 6 is a section view of the latch taken along line 6-6 of FIG. 5. As shown in these views, the latch 312 may be configured as a latch arm 330 pivotally attached to a housing 332 such that the latch arm may pivot about an axis 334 relative to the housing. The latch arm 330 may include an actuator portion 336 and a latch portion 338. The latch portion 338 may, in some examples, form a hook or catch 340 adapted to engage a lip 218 formed on the base station 200. When the catch 340 is so engaged with the lip 218 (i.e., the latch is in an engaged position), the frame assembly 300 is positively retained with the base station 200. That is, to then separate the frame assembly from the base station, the operator must first manipulate the latch by pressing against the actuator portion 336 sufficiently to cause the latch arm 330 to pivot about the axis 334, thereby causing the catch 340 to move away from the lip 218. With the latch in such a disengaged position, the frame assembly may be separated (e.g., lifted away) from the base station as shown in FIG. 7.

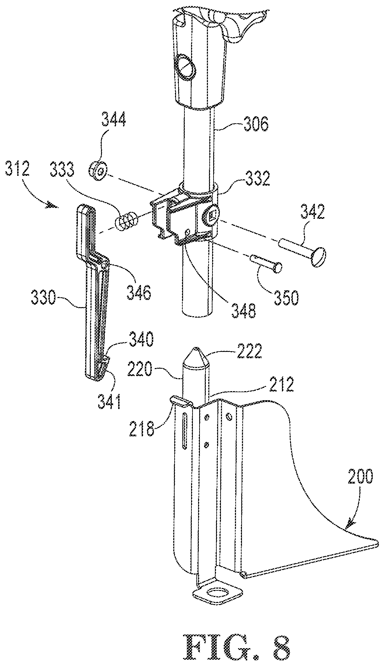

FIG. 8 is an exploded view of one example of the latch 312 and corresponding structure of the base station 200. As shown in this view, the latch housing 332 may be configured as a sleeve that may slide over an end of the tubular attachment member 306 until holes in the housing align with an aperture in the attachment member. The housing 332 may then be secured in place with a fastener 342 and mating nut 344. The latch arm 330 may include an opening 346 that, once aligned with openings 348 in the housing 332, permits the latch arm to be held in place by an inserted pin 350 (which may be retained by a C-clip or cotter pin (not shown)). The latch arm 330 (catch 340) may be biased toward engagement with the lip 218 (i.e., the latch may be biased toward the engaged position) using a compression spring 333 as shown. Alternatively, other biasing members such as torsion springs or other compression members may be provided to bias the latch arm toward engagement with the lip 218.

To attach the frame assembly 300 to the base station 200, the two attachment members 306 may be aligned with associated pins 220 located in each of the receivers 212. Each pin 220 may include a conical tip 222 that may guide the associated attachment member 306 as the frame assembly 300 is attached to the base station. In some examples, each pin 220 may have an outer diameter slightly smaller than an inner diameter of the tubular attachment member 306 so that the frame assembly is firmly immobilized by the base station once attached. As the attachment members 306 of the frame assembly 300 are slid onto the pins 220, each latch arm 330 may pivot, due to the presence of an angled surface 341 riding against the lip 218, until the catch 340 moves past the lip, after which the spring 333 causes the latch to move to the engaged position wherein the catch engages the lip.

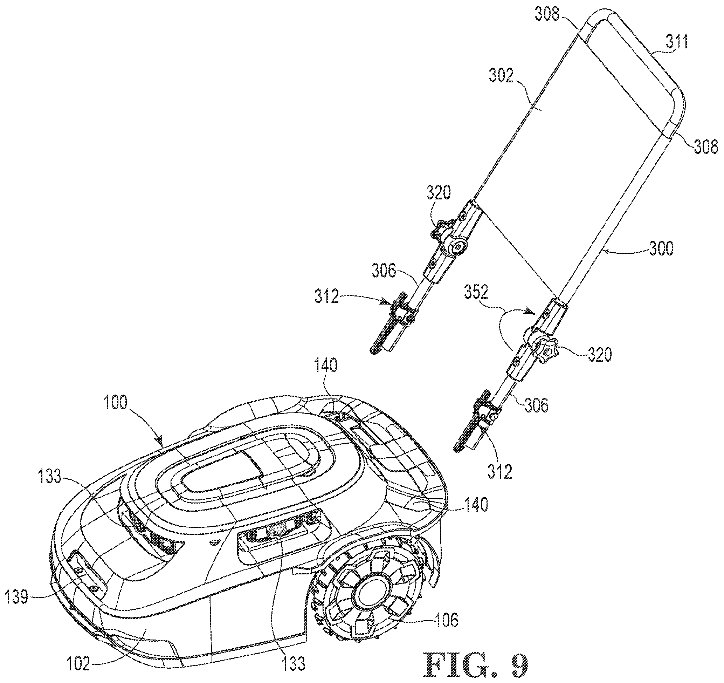

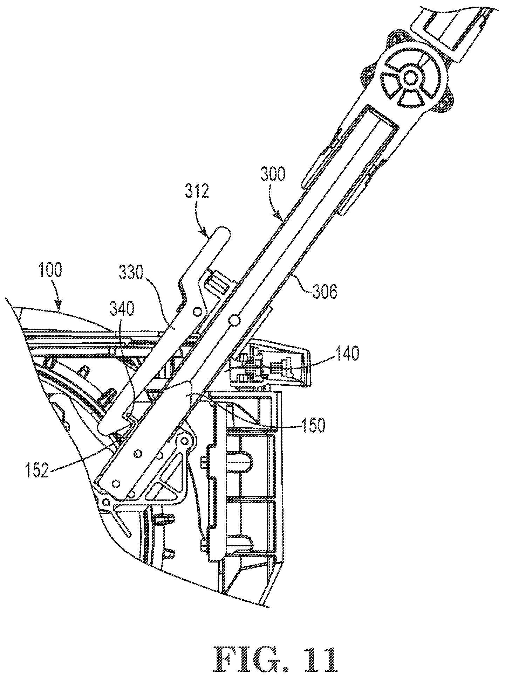

As described above, the frame assembly 300 may be reconfigured to form a mower handle that selectively attaches to the mower 100 to permit manual mower operation by a human operator walking behind the mower in a manner consistent with operation of a conventional, non-autonomous mower. FIGS. 9-11 illustrate the frame assembly 300 after reconfiguration to form the handle. More specifically, FIG. 9 illustrates the handle/frame assembly prior to attachment to the mower while FIG. 10 illustrates the mower and handle after handle attachment. FIG. 11 is a cross section of the mower 100 taken along line 11-11 of FIG. 10 illustrating the latch after attachment.

The terms "frame assembly" and "handle" may be used herein to refer to the same item (frame assembly 300), with the only difference being that "handle" is used to refer the frame assembly once the latter is attached to the mower 100 and, if necessary, is reconfigured (e.g., the support members 308 are rotated relative to the attachment members 306) to present the hand grip 311, e.g., to an operator located at a position behind the mower 100 (as further described below). As a result, unless otherwise noted, these two terms ("frame assembly" and "handle") may be used interchangeably herein.

In some examples, reconfiguration of the frame assembly 300 to form the handle may be accomplished by loosening the knobs 320 and then pivoting the support members 308 (including the canopy 302 and hand grip 311) in the direction 352 (see FIG. 9). In some embodiments, the support members 308 may be pivoted until they lie generally in the same plane as the attachment members 306. However, such movement is exemplary only as the support members 308 may be pivoted to most any position to achieve the desired hand grip 311 elevation. While shown as pivoted prior to attachment of the frame assembly 300 to the mower 100, it is also possible to attach the frame assembly 300 to the mower 100 and then reconfigure the frame assembly thereafter.

FIGS. 9 and 10 further illustrate an opening 139 in the housing 102. Located inside the opening are the contacts 138 (see FIG. 3) that engage the contacts 210 of the base station 200 (see FIG. 6) when the mower is received by the base station.

To permit attachment of the frame assembly 300 to the mower 100, the mower may include a receiver 140 as shown in FIGS. 9 and 11 corresponding to each of the attachment members 306, wherein each receiver 140 has a structure similar to the receiver(s) 212 of the base station 200. For example, each receiver 140 may include a pin 150 supported by the mower frame. The pins 150, like the pins 220, may include a conical tip to assist with guiding the frame assembly 300 into engagement with the mower 100. The mower frame may further include a lip 152 similar to the lip 218, wherein the catch 340 of the latch arm 330 may engage the lip 152 when the frame assembly/handle 300 is attached to the mower. This provides the desired positive retention of the frame assembly such that the frame assembly may function as a mower handle during operation of the mower in the manual operating mode.

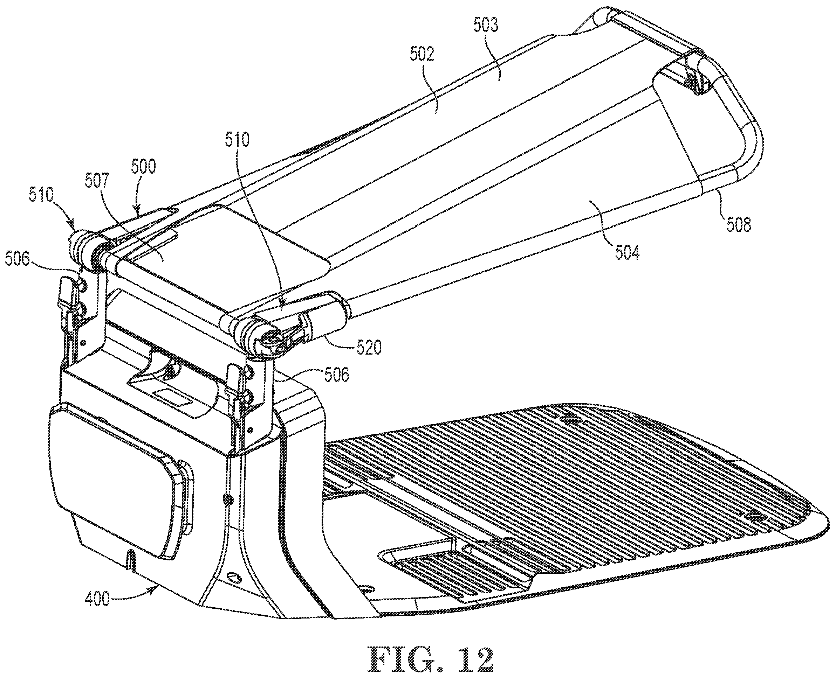

FIGS. 12-14 illustrate a base station 400 in accordance with other embodiments of the present disclosure. The base station may again be part of a system that includes a mower (not shown) and a frame assembly 500, the latter again forming a handle that may be used during the manual operating mode.

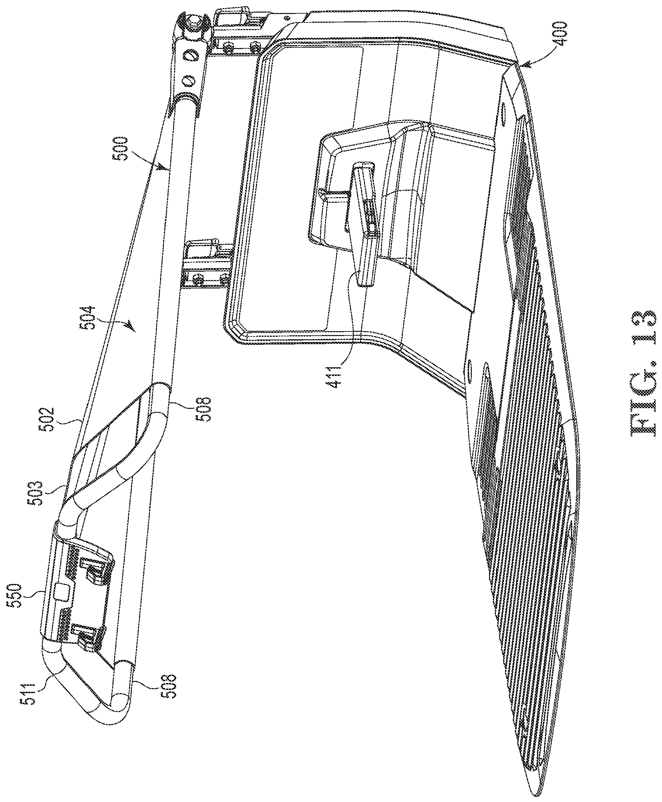

The base station 400 may be similar in many respects to the base station 200 already described herein and, as a result, common or similar aspects are not described again herein below. However, it is noted that the base station 400 may be configured for a mower that enters the base station in reverse (i.e., for mowers that have the charging opening (see, e.g., opening 139 in FIGS. 9 and 10) on a rear side of the mower to engage charging contacts 411 (see FIG. 13) of the base station. Such a "reverse-in" construction may be beneficial for some mower configurations.

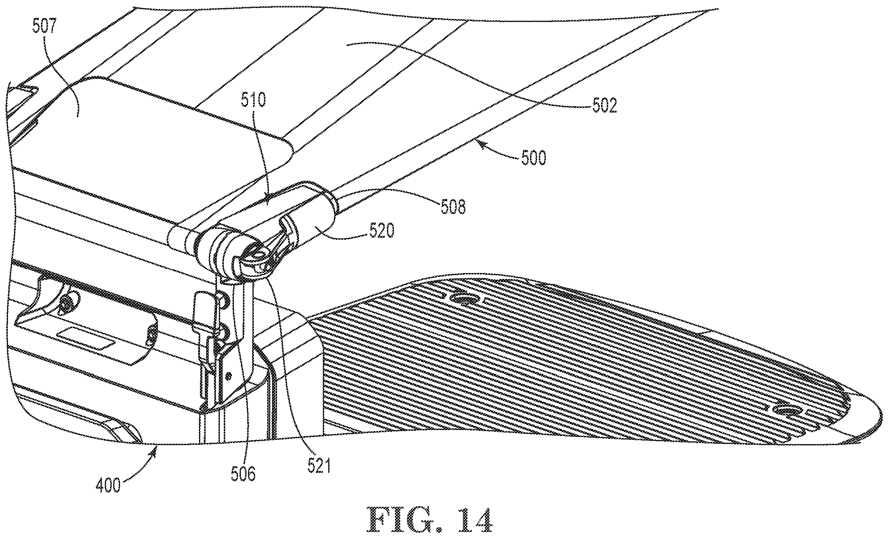

As shown in FIG. 14, the frame assembly 500 may be constructed similar to the frame assembly 300 and thus reference is made to the description provided above for such similar features/aspects. One feature of the frame assembly 500 that differs from the frame assembly 300, however, is that the connecting joints 510 (which again connects attachment members 506 to support members 508 of the frame assembly) may utilize a cam lock lever 520 having a cam 521 (see FIG. 14) on each side (lock lever not shown in FIG. 13) as opposed to the knobs 320 described above. As a result, the frame assembly may be transitioned to use as a mower handle by rotating each cam lock lever 520 by 90 degrees, which will then permit the support members 508 to rotate relative to the attachment members 506, after which the cam lock levers 520 may be reengaged to lock the frame assembly 500 in the desired configuration to function as a handle for manual mower operation.

As with the frame assembly 300, the frame assembly 500 may further support a canopy 502 to shade the vehicle when the vehicle is received by the base station 400. Again, the canopy shares many features in common with the canopy 302, wherein description of such commonality is not repeated herein. However, as is evident in FIGS. 12 and 13, the canopy 502 may provide a more three-dimensional shape as opposed to the canopy 302. For example, the canopy may include a generally planar mid-section 503 with side sections 504 sloped toward (e.g., downwardly when the frame assembly is attached to the base station as shown in FIGS. 12-14) the respective support members 508. This canopy shape is the result of a hand grip 511 (formed integrally with the support members 508) extending out of the plane formed by the support members as best shown in FIG. 13.

The non-planar shape of the canopy may provide various benefits. For example, when used as a shade for the mower on the base station, the canopy may direct water (e.g., rain) away from the top of the mower more effectively than a flat or planar canopy. The shaped canopy may also increase shade to the mower in lower sun angle environments.

In some embodiments, the canopy may include a cutout 507 at or near the connecting joints 510 as shown in FIG. 12. The cutout may reduce potential visual interference to the rear facing camera 133 (see FIG. 2) when the handle is attached to the mower (e.g., during a training phase).

The frame assembly 500 may also include a cradle 550 to support a mobile computer 119 (see FIG. 2) such as a mobile phone. A mobile phone may be used during training of the mower as described in, for example, in U.S. Pat. App. Pub. Number US2020/0050208 published February 13, 2020. While the particular construction of the cradle may vary, it may include friction or biased pads to secure the phone during operation.

As one of skill in the art may recognize, examples described herein may thus provide a canopy that provides solar shading to a mower when the mower is received by an open or uncovered base station. In some examples, the canopy may form part of a frame assembly that may be optionally separated from the base station, attached to the mower, and reconfigured to provide a handle for an operator to operate the mower in a manual operating mode.

In still other examples, autonomous operation of the mower may benefit from attachment of the frame assembly to the mower. For instance, where the canopy includes one or more photovoltaic cells (potentially on one or both sides of the canopy), the frame assembly may be attached to the mower, but left generally in its folded-over configuration as shown in FIG. 1. As such, the photovoltaic cell may generate electricity to charge the mower battery packs during autonomous operation. In such a configuration, attachment of the frame assembly to the mower may not by itself as described above disable autonomous operation. Instead, autonomous operation could be disabled by a sensor associated with one or both of the connecting joints 310 that is capable of detecting when the support members are rotated relative to the attachment members to provide the desired handle position for operation in the manual operating mode.

## Claims

1. An autonomous working vehicle system (50) comprising:
an autonomous working vehicle (100) comprising a surface;
a base station (200) configured to receive the autonomous working vehicle, wherein the surface of the vehicle is uncovered by the base station when the vehicle is received by the base station; and
a canopy (302) suspended above the base station (200) , the canopy configured to provide shade to at least a portion of the surface when the vehicle (100) is received by the base station;
**characterized by** a frame (304) supporting the canopy (302), wherein the frame comprises an attachment portion (306) configured to removably attach to the base station (200), and a support portion (308) configured to support the canopy, wherein the frame defines a handle comprising a hand grip (311), and wherein the frame is configured to be selectively detached from the base station (200) and attached to the vehicle (100) to allow usage of the vehicle in a manual operating mode.

2. The system according to claim 1, wherein the canopy (302) comprises a knit material.

3. The system according to claim 1, wherein the canopy (302) comprises a photovoltaic cell (314).

4. The system according to claim 3, further comprising a circuit configured to operatively connect the photovoltaic cell (314) to a battery (114) located on the vehicle (100) when the vehicle is received by the base station (200).

5. The system according to claim 1, wherein the frame further comprises a connecting joint (310) configured to connect the attachment portion (306) to the support portion (308).

6. The system according to any one of claims 1-5, further comprising a latch (312) configured to permit positive retention of the frame with the base station (200).

7. The system according to claim 6, wherein the latch (312) is affixed to the frame.

8. The system according to claim 1, wherein the vehicle (100) comprises a sensor (142) configured to detect when the frame is attached to the vehicle.

9. The system according to claim 1, wherein the base station (200) comprises a sensor (214) configured to detect when the frame is attached to the base station.

10. The system according to any one of claims 1-9, wherein the autonomous working vehicle (100) comprises an autonomous lawn mower.

11. A method of operating an autonomous vehicle (100) comprising:
receiving the vehicle (100) with a base station (200), wherein a surface of the vehicle remains uncovered by the base station when the vehicle is received by the base station;
charging a battery (114) associated with the vehicle (100) while the vehicle is received by the base station (200); and
shading the surface of the vehicle (100) while the vehicle is received by the base station (200) using a canopy (302) suspended above the base station, wherein the canopy is supported by a frame (304) selectively attachable to the base station;
**characterized by** selectively detaching the frame (304) from the base station (200);
attaching the frame (304) to the vehicle (100), wherein a portion of the frame forms a hand grip (311) configured to receive one or both hands of an operator; and
operating the vehicle in a manual operating mode using the hand grip.

12. The method according to claim 11, further comprising charging the battery (114) using a photovoltaic cell (314) associated with the canopy (302).

13. The method according to any one of claims 11-12, further comprising disabling an autonomous operating mode of the vehicle upon attachment of the frame (304) to the vehicle.

## Patentansprüche

1. Autonomes Arbeitsfahrzeugsystem (50), umfassend:
ein autonomes Arbeitsfahrzeug (100), das eine Oberfläche umfasst;
eine Basisstation (200), die so konfiguriert ist, dass sie das autonome Arbeitsfahrzeug aufnimmt, wobei die Oberfläche des Fahrzeugs von der Basisstation unbedeckt ist, wenn das Fahrzeug von der Basisstation aufgenommen wird; und
eine über der Basisstation (200) aufgehängte Überdachung (302), wobei die Überdachung so konfiguriert ist, dass sie zumindest einen Abschnitt der Oberfläche beschattet, wenn das Fahrzeug (100) von der Basisstation aufgenommen wird;
**gekennzeichnet durch** einen Rahmen (304), der die Überdachung (302) trägt, wobei der Rahmen einen Befestigungsabschnitt (306), der so konfiguriert ist, dass er lösbar an der Basisstation (200) befestigt werden kann, und einen Trägerabschnitt (308) umfasst, der so konfiguriert ist, dass er die Überdachung trägt, wobei der Rahmen einen Griff definiert, der einen Handgriff (311) umfasst, und wobei der Rahmen so konfiguriert ist, dass er selektiv von der Basisstation (200) gelöst und am Fahrzeug (100) befestigt werden kann, um die Verwendung des Fahrzeugs in einem manuellen Betriebsmodus zu ermöglichen.

2. System nach Anspruch 1, wobei die Überdachung (302) ein Strickmaterial umfasst.

3. System nach Anspruch 1, wobei die Überdachung (302) eine Photovoltaikzelle (314) umfasst.

4. System nach Anspruch 3, ferner umfassend eine Schaltung, die so konfiguriert ist, dass sie die Photovoltaikzelle (314) funktionsfähig mit einer Batterie (114) verbindet, die sich am Fahrzeug (100) befindet, wenn das Fahrzeug von der Basisstation (200) aufgenommen wird.

5. System nach Anspruch 1, wobei der Rahmen ferner ein Verbindungsgelenk (310) umfasst, das so konfiguriert ist, dass es den Befestigungsabschnitt (306) mit dem Trägerabschnitt (308) verbindet.

6. System nach einem der Ansprüche 1 bis 5, ferner umfassend eine Verriegelung (312), die so konfiguriert ist, dass sie einen sicheren Halt des Rahmens an der Basisstation (200) ermöglicht.

7. System nach Anspruch 6, wobei die Verriegelung (312) an dem Rahmen befestigt ist.

8. System nach Anspruch 1, wobei das Fahrzeug (100) einen Sensor (142) umfasst, der so konfiguriert ist, dass er erfasst, wenn der Rahmen an dem Fahrzeug befestigt ist.

9. System nach Anspruch 1, wobei die Basisstation (200) einen Sensor (214) umfasst, der so konfiguriert ist, dass er erfasst, wenn der Rahmen an der Basisstation befestigt ist.

10. System nach einem der Ansprüche 1 bis 9, wobei das autonome Arbeitsfahrzeug (100) einen autonomen Rasenmäher umfasst.

11. Verfahren zum Betreiben eines autonomen Fahrzeugs (100), umfassend:
Aufnehmen des Fahrzeugs (100) mit einer Basisstation (200), wobei eine Oberfläche des Fahrzeugs von der Basisstation unbedeckt bleibt, wenn das Fahrzeug von der Basisstation aufgenommen wird;
Laden einer mit dem Fahrzeug (100) verbundenen Batterie (114), während das Fahrzeug von der Basisstation (200) aufgenommen wird; und
Beschatten der Oberfläche des Fahrzeugs (100), während das Fahrzeug von der Basisstation (200) aufgenommen wird, unter Verwendung einer über der Basisstation aufgehängten Überdachung (302), wobei die Überdachung von einem Rahmen (304) getragen wird, der selektiv an der Basisstation befestigt werden kann;
**gekennzeichnet durch** das selektive Lösen des Rahmens (304) von der Basisstation (200);
Befestigen des Rahmens (304) an dem Fahrzeug (100), wobei ein Abschnitt des Rahmens einen Handgriff (311) bildet, der so konfiguriert ist, dass er eine oder beide Hände eines Bedieners aufnehmen kann; und
Betreiben des Fahrzeugs in einem manuellen Betriebsmodus unter Verwendung des Handgriffs.

12. Verfahren nach Anspruch 11, ferner umfassend das Laden der Batterie (114) unter Verwendung einer mit der Überdachung (302) verbundenen Photovoltaikzelle (314).

13. Verfahren nach einem der Ansprüche 11 bis 12, ferner umfassend das Deaktivieren eines autonomen Betriebsmodus des Fahrzeugs beim Befestigen des Rahmens (304) an dem Fahrzeug.

## Revendications

1. Système de véhicule à fonctionnement autonome (50) comprenant :
un véhicule à fonctionnement autonome (100) comprenant une surface ;
une station de base (200) configurée pour recevoir le véhicule à fonctionnement autonome, dans lequel la surface du véhicule est découverte par la station de base lorsque le véhicule est reçu par la station de base ; et
un auvent (302) suspendu au-dessus de la station de base (200), l'auvent étant configuré pour ombrager au moins une portion de la surface lorsque le véhicule (100) est reçu par la station de base ;
**caractérisé par** un cadre (304) supportant l'auvent (302), le cadre comprenant une portion de fixation (306) configurée pour se fixer de manière amovible à la station de base (200), et une portion de support (308) configurée pour supporter l'auvent, le cadre définissant une poignée comprenant un élément de préhension manuelle (311), et le cadre étant configuré pour être détaché sélectivement de la station de base (200) et fixé au véhicule (100) pour autoriser l'utilisation du véhicule dans un mode de fonctionnement manuel.

2. Système selon la revendication 1, dans lequel l'auvent (302) comprend un matériau tricoté.

3. Système selon la revendication 1, dans lequel l'auvent (302) comprend une cellule photovoltaïque (314).

4. Système selon la revendication 3, comprenant en outre un circuit configuré pour relier fonctionnellement la cellule photovoltaïque (314) à une batterie (114) située sur le véhicule (100) lorsque le véhicule est reçu par la station de base (200).

5. Système selon la revendication 1, dans lequel le cadre comprend en outre un joint de liaison (310) configuré pour relier la portion de fixation (306) à la portion de support (308).

6. Système selon l'une quelconque des revendications 1 à 5, comprenant en outre un loquet (312) configuré pour permettre une retenue positive du cadre avec la station de base (200).

7. Système selon la revendication 6, dans lequel le loquet (312) est apposé sur le cadre.

8. Système selon la revendication 1, dans lequel le véhicule (100) comprend un capteur (142) configuré pour détecter lorsque le cadre est fixé au véhicule.

9. Système selon la revendication 1, dans lequel la station de base (200) comprend un capteur (214) configuré pour détecter lorsque le cadre est fixé à la station de base.

10. Système selon l'une quelconque des revendications 1 à 9, dans lequel le véhicule à fonctionnement autonome (100) comprend une tondeuse à gazon autonome.

11. Procédé de fonctionnement d'un véhicule autonome (100) comprenant :
la réception du véhicule (100) avec une station de base (200), une surface du véhicule restant découverte par la station de base lorsque le véhicule est reçu par la station de base ;
la charge d'une batterie (114) associée au véhicule (100) lorsque le véhicule est reçu par la station de base (200) ; et
l'ombrage de la surface du véhicule (100) pendant que le véhicule est reçu par la station de base (200) à l'aide d'un auvent (302) suspendu au-dessus de la station de base, l'auvent étant supporté par un cadre (304) pouvant être fixé sélectivement à la station de base ;
**caractérisé par** le détachement sélectif du cadre (304) de la station de base (200) ;
la fixation du cadre (304) au véhicule (100), une portion du cadre formant un élément de préhension manuelle (311) configuré pour recevoir une ou les deux mains d'un opérateur ; et
la mise en fonctionnement du véhicule dans un mode de fonctionnement manuel à l'aide de l'élément de préhension manuelle.

12. Procédé selon la revendication 11, comprenant en outre la charge de la batterie (114) à l'aide d'une cellule photovoltaïque (314) associée à l'auvent (302).

13. Procédé selon l'une quelconque des revendications 11 et 12, comprenant en outre la désactivation d'un mode de fonctionnement autonome du véhicule lors de la fixation du cadre (304) au véhicule.
